**Europäisches Patentamt**

**European Patent Office**

**Office européen des brevets**

(19)

(11) Veröffentlichungsnummer : **0 576 516 B1**

(12)

# EUROPÄISCHE PATENTSCHRIFT

(45) Veröffentlichungstag der Patentschrift :
**19.07.95 Patentblatt 95/29**

(51) Int. Cl.$^6$ : **F02P 5/15**

(21) Anmeldenummer : **92906883.1**

(22) Anmeldetag : **18.03.92**

(86) Internationale Anmeldenummer :
**PCT/EP92/00585**

(87) Internationale Veröffentlichungsnummer :
**WO 92/16742 01.10.92 Gazette 92/25**

(54) **KLOPFREGELUNG EINER FREMDGEZÜNDETEN BRENNKRAFTMASCHINE.**

(30) Priorität : **22.03.91 DE 4109433**

(43) Veröffentlichungstag der Anmeldung :
**05.01.94 Patentblatt 94/01**

(45) Bekanntmachung des Hinweises auf die
Patenterteilung :
**19.07.95 Patentblatt 95/29**

(84) Benannte Vertragsstaaten :
**DE FR GB**

(56) Entgegenhaltungen :
**EP-A- 0 101 342**
**WO-A-89/12746**
**WO-A-91/10829**
**WO-A-91/14097**
**GB-A- 2 231 917**
**GB-A- 2 231 920**
**US-A- 4 829 962**

(73) Patentinhaber : **AUDI AG**
**Postfach 10 02 20**
**D-85002 Ingolstadt (DE)**

(72) Erfinder : **PFALZGRAF, Bernhard**
**Unterringstrasse 30**
**D-8070 Ingolstadt (DE)**
Erfinder : **GIBTNER, Siegfried**
**Kammühlweg 60**
**D-8074 Gaimersheim (DE)**

(74) Vertreter : **Le Vrang, Klaus**
**AUDI AG,**
**Patentabteilung I/EXA,**
**Postfach 10 02 20**
**D-85002 Ingolstadt (DE)**

EP 0 576 516 B1

Jouve, 18, rue Saint-Denis, 75001 PARIS

## Beschreibung

Die Erfindung betrifft eine Klopfregelung einer fremdgezündeten Brennkraftmaschine nach dem Oberbegriff des Anspruchs 1.

Für den optimierten Betrieb einer fremdgezündeten Brennkraftmaschine ist es erforderlich, den Zündzeitpunkt in Abhängigkeit der Drehzahl und Last zu verändern. Dazu ist es bekannt, in einem Kennfeld einer elektronischen Motorsteuereinrichtung Kennfeldvorgaben in Abhängigkeit der Drehzahl und Last abzulegen, die für einen aktuellen Zündzeitpunkt jeweils ausgelesen werden.

Eine weitere, bekannte Optimierung hinsichtlich eines geringen Kraftstoffverbrauchs und geringen Schadstoffausstoßes wird dadurch erreicht, daß die Brennkraftmaschine im höheren Lastbereich nahe an der Klopfgrenze betrieben wird. Da die Lage der Klopfgrenze von Betriebsparametern, insbesondere der Treibstoffqualität, der Temperatur und des Luftdrucks abhängt, ist es bekannt, eine Klopfregelung in der Art einer Kurzzeitregelung durchzuführen (FR-A-2 511 435).

Dabei wird beim Auftreten von Klopfereignissen die aus dem abgelegten Kennfeld ausgelesene Kennfeldvorgabe jeweils um einen Schritt zu einem Regelhub auf einen Wert für einen aktuellen Zündzeitpunkt in Richtung Spätzündung zurückgenommen. Beim weiteren Ausbleiben von Klopfereignissen wird der Wert für den aktuellen Zündzeitpunkt schrittweise wieder in Richtung Frühzündung auf die Kennfeldvorgabe hin zurückgeführt.

Diese Kurzzeitregelung stellt sich mit bestimmten Regelhüben in einem gerade gefahrenen Kennfeldbereich mit bestimmter Drehzahl und Last ein. Wenn dieser Kennfeldbereich verlassen wird und ein anderer Kennfeldbereich angefahren wird, ändert sich üblicherweise auch die aus dem Kennfeld ausgegebene Kennfeldvorgabe entsprechend dem Betrieb in einem neuen Kennfeldbereich. Damit muß sich auch die Kurzzeitregelung auf diese neuen Gegebenheiten wieder einstellen, d.h. daß bei ungünstigen Übergangsverhältnissen relativ viele klopfende Verbrennungen mit teilweise heftigen Klopfern in Kauf genommen werden müssen, bis sich die Kurzzeitregelung wieder auf den Betrieb im neuen Kennfeldbereich optimal eingestellt hat. Dies geschieht insbesondere dann, wenn die Klopfgrenze relativ weit von der Kennfeldvorgabe entfernt liegt und die Regelung mit relativ großen Regelhüben betrieben werden muß. Der Übergang von einem Kennfeldbereich auf den anderen führt somit zu einer erhöhten Belastung der Brennkraftmaschine und stört auch den akustischen Komfort durch teilweise stark hörbare Klopfer.

Es ist weiter bekannt, mehrere vorgegebene und von vorneherein bestimmte Kennfelder abzulegen und je nach Bedarf zur Verfügung zu stellen. Dazu ist es beispielsweise bekannt, von einem bestimmten Kennfeld, das dem Betrieb mit Superkraftstoff zugeordnet ist, durch Umstecken eines Steckers im Motorraum auf ein zweites, vorbestimmtes Kennfeld überzugehen, das beim Betrieb mit Normalkraftstoff zu verwenden ist.

Es ist auch bekannt, solche Kennfeldumschaltungen automatisch durchzuführen, wenn eine große Anzahl von Klopfereignissen registriert wird. Bei diesen Umschaltungen handelt es sich um eine von vorneherein vorgegebene, globale Änderung bzw. Zurücknahme des Zündzeitpunkts für das gesamte Motorkennfeld mit vielen Klopfereignissen bei den Übergängen.

Eine Langzeitanpassung ist außerdem aus dem Dokument US-A-4 829 962 bekannt.

Aufgabe der Erfindung ist es demgegenüber, die Anzahl von Klopfereignissen zu verringern und die Klopfregelung insgesamt stabiler zu halten.

Diese Aufgabe wird mit den Merkmalen des Anspruchs 1 gelöst.

Gemäß Anspruch 1 wird in einer ersten Korrekturmaßnahme eine Langzeitanpassung in der Klopfregelung in der Weise ausgeführt, daß für einen bestimmten Kennfeldbereich mit bestimmter Drehzahl und Last ein Anpassungswert entsprechend dem Abstand der aktuellen Zündzeitpunkte von der Kennfeldvorgabe ermittelt wird. Dieser Anpassungswert wird beim Verlassen des Kennfeldbereichs in einem Korrekturkennfeld abgelegt und als "gelernte" Korrekturgröße beim Wiederanfahren dieses Kennfeldbereichs ausgegeben und die Kennfeldvorgabe damit zur Vorsteuerung der Kurzzeitregelung beaufschlagt.

Die Klopfregelung enthält somit eine Art von Selbstlernprozeß, in dem zusätzlich zu dem von Anfang an abgelegten Kennfeldvorgaben betriebsparameterabhängige Anpassungswerte für jeden angefahrenen Kennfeldbereich ermittelt und abgespeichert werden. Ein solcher Anpassungswert kann beispielsweise der Wert für die Zurücknahme des Zündzeitpunkts in Richtung Spätzündung sein, wenn gerade eine schlechtere Kraftstoffqualität getankt worden war. Der Anpassungswert wird hierbei ausgehend von der Kurzzeitregelung so ermittelt, daß er etwa dem Abstand der Klopfgrenze, d.h. etwa der Lage der aktuellen Zündzeitpunkte von der Kennfeldvorgabe entspricht. Wenn nun dieser Kennfeldbereich verlassen wurde und wieder neu angefahren wird, haben sich üblicherweise die Langzeitbedingungen, wie beispielsweise die getankte Kraftstoffqualität, nicht schlagartig und grundsätzlich geändert. Beim Wiederanfahren des Kennfeldbereichs wird daher die Kennfeldvorgabe mit dem abgespeicherten Anpassungswert beaufschlagt, so daß die Regelung vorgesteuert ist und bereits in der Nähe der Klopfgrenze startet bzw. auf ein vorgesteuertes Niveau bezogen ist. Ohne die

2

Vorsteuerung würde beim Anfahren eines neuen Kennfeldbereichs die Regelung üblicherweise in einem klopfenden Bereich entsprechend der Kennfeldvorgabe starten und mit einer Reihe von heftigen Klopfern aus diesem Bereich heraus regeln.

Durch diese Korrekturmaßnahme in der Art einer selbstlernenden Kennfeldvorgabe für jeden bereits angefahrenen Kennfeldbereich wird die Anzahl von Klopfereignissen verringert und die Klopfregelung insgesamt stabiler gehalten.

Die Langzeitanpassung enthält eine zweite Nachführmaßnahme, dergestalt, daß bei einer großen, erkannten und erforderlichen Änderung eines (oder ggfs. mehrerer) Anpassungswertes ($L_Z$) für einen (oder ggfs. mehreren) Kennfeldbereich bzw. an der (oder den) zugeordneten Korrekturkennfeldstelle auch an den anderen Korrekturkennfeldstellen entsprechende Änderungen der Anpassungswerte durch eine Ergänzung mit Nachführwerten durchgeführt wird.

Dieser zweiten Nachführmaßnahme liegt die Erkenntnis zugrunde, daß bei großen Änderungen eines (oder mehrerer) Anpassungswertes für einen (oder mehreren) Kennfeldbereich auch für andere Kennfeldbereiche bzw. Korrekturkennfeldstellen Änderungen erforderlich sind. Diese Änderungen werden mit Hilfe von Nachführwerten durchgeführt, die zu den abgelegten und "gelernten" Anpassungswerten (in positiver oder negativer Richtung) ergänzt werden.

Mit dieser Nachführmaßnahme werden somit die Kennfeldvorgaben in einer üblicherweise richtigen Art beeinflußt, obwohl große Änderungen nur für einen oder mehrere Kennfeldbereiche erkannt wurden und die übrigen Kennfeldbereiche noch nicht im Sinne des Lernprozesses der ersten Korrekturmaßnahme angefahren wurden. Damit wird beim Anfahren eines neuen Kennfeldbereichs der dort abgelegte Anpassungswert einem neuen, noch zu lernenden Anpassungswert angenähert, wodurch die Anzahl von Klopfereignissen weiter verringert und die Klopfregelung stabiler gehalten wird.

In einer einfachen Ausführung nach Anspruch 2 wird als Anpassungswert ein aktueller Regelhub, zweckmäßigerweise der letzte Regelhub vor dem Verlassen des jeweiligen Kennfeldbereiches erfaßt und abgespeichert.

Ein günstigerer Anpassungswert, der eine bessere Aussage über die Lage der Klopfgrenze ergibt, wird durch Mittelung von Regelhüben erhalten. Die Mittelung wird innerhalb eines bestimmten Beobachtungszeitintervalls oder der Verweildauer in einem Kennfeldbereich durchgeführt. Nach Anspruch 3 werden für die Mittelung jeweils vorliegende Regelhübe zum Zeitpunkt eines Klopfereignisses herangezogen, während nach Anspruch 4 eine Mittelung über alle Regelhübe innerhalb eines Beobachtungszeitintervalls oder während der Verweildauer im bestimmten Kennfeldbereich durchgeführt wird. Beide Mittelungen ergeben eine geeignete, verwertbare Aussage über die Lage der Klopfgrenze und damit einen geeigneten Anpassungswert. Ein Beobachtungszeitintervall bzw. eine verwertbare Verweildauer in einem Kennfeldbereich mit einer Anzahl in der Größenordnung von mindestens 500 Zündungen hat sich als geeignet bewährt.

Die Klopfgrenze ist bekanntlich keine genau definierte Grenze, sondern als statistische Grenze zu sehen, wobei je nach der Qualität der gerade vorliegenden Verbrennung auch Klopfereignisse oberhalb oder unterhalb der ermittelten statistischen Klopfgrenze vorkommen können. Da somit die Lage der Klopfgrenze ohnehin keine genau definierte Größe darstellt, wird mit Anspruch 5 vorgeschlagen, einen Anpassungswert nur dann im Korrekturfeld abzulegen bzw. einen alten Anpassungswert durch einen neuen zu ersetzen, wenn der Wert der Änderung der gemittelten Regelhübe über dem Wert einer festgelegten Schwelle liegt. Da eine Mittelung der Regelhübe nur innerhalb einer gewissen Verweildauer zu verwertbaren Ergebnissen führt, wird weiter die Bedingung eingeführt, daß die Abspeicherung von Anpassungswerten nur dann erfolgt, wenn eine bestimmte Anzahl von Zündungen nicht unterschritten wurde.

In einer Ausführungsform nach Anspruch 6 werden vorgegebene Inkrementwerte bei jedem Klopfereignis innerhalb eines Beobachtungszeitintervalls bzw. einer Verweildauer aufsummiert und dadurch ein Anpassungswert ermittelt. Auch hierbei kann ein Anpassungswert nur für den Fall vorgesehen sein, daß die ermittelte Summe über einem vorgegebenen Schwellenwert liegt.

Mit den bisher beschriebenen Maßnahmen wird die Kurzzeitregelung über die Anpassungswerte von der abgelegten Kennfeldvorgabe in Richtung Spätzündung verschoben. Wenn die Klopfgrenze allmählich, beispielsweise durch Nachtanken von Treibstoff mit besserer Qualität, wieder in Richtung auf die ursprüngliche Kennfeldvorgabe wandert, sollen auch die für jeden Kennfeldbereich abgelegten Anpassungswerte wieder angepaßt und nachgezogen werden. Dies wird mit den Merkmalen nach Anspruch 7 erreicht, indem beim Ausbleiben oder bei wenigen Klopfereignissen der jeweilige Anpassungswert für einen bestimmten Kennfeldbereich wieder in Richtung auf die ursprüngliche Kennfeldvorgabe schrittweise um eine bestimmte Rückführgröße ($\Delta L_K$) zurückgenommen wird. Auch hier kann ein Schwellwert eingeführt sein.

Vorteilhaft werden nach Anspruch 8 jedem Zylinder der Brennkraftmaschine eigene Kennfelder für die Kennfeldvorgaben und jeweils eigene Korrekturkennfelder zugeordnet und die Klopfregelung mit der erfindungsgemäßen Anpassung zylinderselektiv durchgeführt. Damit kann jeder der Zylinder separat im thermo-

3

dynamischen Optimum betrieben werden, so daß Kraftstoffverbrauch und Schadstoffausstoß auf möglichst kleinem Niveau gehalten werden.

Zur Durchführung der Nachführmaßnahme nach Anspruch 1 ist die Erkennung einer großen Änderung eines oder ggfs. mehrerer Anpassungswerte $L_Z$ an einem oder ggfs. mehreren jeweils zugeordneten Kennfeldbereichen erforderlich. Dies wird nach Anspruch 9 vorteilhaft durch zwei entsprechende Korrekturkennfelder bewirkt:

Das erste Korrekturkennfeld wird als Initialisierungskennfeld durch die erste Korrekturmaßnahme nicht beeinflußt und aktualisiert. Das zweite (anfänglich gleiche) Korrekturkennfeld wird dagegen durch die erste Korrekturmaßnahme durch Änderungen der abgelegten Anpassungswerte aktualisiert und zur Korrektur und Vorsteuerung der Kennfeldvorgabe für die Kurzzeitregelung verwendet. Die abgelegten Anpassungswerte werden während des Betriebs bzw. einer Änderung im zweiten Korrekturkennfeld verglichen. Beim Überschreiten eines (absoluten) Differenzwerts bzw. eines bestimmten Schwellwerts werden dann alle abgelegten Anpassungswerte nachgezogen und mit vorgegebenen Nachführwerten ergänzt.

Für eine vorteilhafte, individuelle Behandlung jedes Kennfeldbereichs ist ein Langzeit-Schwellwert-Kennfeld vorgesehen, in dem an den Korrekturfeldern entsprechenden Stellen bestimmte, in der Regel empirisch festgestellte Schwellwerte für den Vergleich der Anpassungswerte abgelegt sind (Anspruch 10).

Es hat sich gezeigt, daß zur Reduzierung der Speicherkapazität für jeden Zylinder bzw. für jedes zylinderspezifische Korrekturkennfeld ein gemeinsames Langzeit-Schwellwert-Kennfeld ausreicht (Anspruch 11).

In einer bevorzugten Ausführungsform nach Anspruch 12 wird auch eine individuelle Beeinflussung der einzelnen Kennfeldbereiche durch ein Langzeit-Nachführ-Kennfeld vorgesehen, aus dem betriebspunktspezifisch Nachführwerte zur Ergänzung der Anpassungwerte ausgelesen werden. Auch diese Nachführwerte sind in der Regel empirisch für jede Brennkraftmaschine bzw. jeden Brennkraftmaschinentyp zu ermitteln. Zur Reduzierung von Speicherplatzkapazität kann auch hier nur ein Langzeit-Nachführ-Kennfeld für die zylinderspezifische Regelung zur Verfügung gestellt werden.

Mit den Merkmalen des Anspruchs 14 wird erreicht, daß ein bereits "gelernter" Korrekturwert im zweiten Kennfeld Vorrang hat gegenüber der mehr globalen Nachsteuerung durch die Nachführwerte. Dazu wird das erste Korrekturkennfeld durch die Nachführwerte erhöht (bzw. verringert) und diese Werte mit den aktuellen Korrekturwerten im zweiten Korrekturkennfeld verglichen. Die Korrekturwerte im zweiten Korrekturkennfeld werden nur dann auf die durch die Nachführwerte ergänzten Korrekturwerte des ersten Korrekturkennfelds erhöht (bzw. verringert), wenn dort nicht ohnehin bereits höhere (oder niedrigere), gelernte Korrekturwerte vorliegen, die dann als üblicherweise bessere Werte beibehalten werden.

Mit Anspruch 15 wird eine Schutzmaßnahme gegen ein Weglaufen der Regelparameter vorgeschlagen, wozu die mögliche Ergänzung von Anpassungswerten mit Nachführwerten in einer Richtung auf eine bestimmte, maximale Anzahl begrenzt wird.

Zur Reduzierung des Speicherbedarfs ist es bekannt, eine Anzahl benachbarter Kennfeldstellen, entsprechend Drehzahl- und Lastbereichen, zusammenzufassen und diesen Kennfeldbereichen jeweils dieselbe Kennfeldvorgabe zuzuordnen. Zu den Rändern dieser Kennfeldbereiche und Grenzen zu benachbarten Kennfeldbereichen hin ist es bekannt, die Kennfeldvorgaben für einen kontinuierlichen Übergang zu interpolieren. Nach Anspruch 16 soll einem solchen Kennfeld bzw. zylinderspezifischen Kennfeldern mit Kennfeldbereichen jeweils ein Korrekturkennfeld mit entsprechenden Kennfeldbereichen zugeordnet sein, wobei jeweils ein Anpassungswert in einem entsprechenden Korrekturkennfeldbereich abgelegt wird. Weiter sind auch das Langzeit-Schwellwert-Kennfeld und das Langzeit-Nachführ-Kennfeld in entsprechende Kennfeldbereiche aufgeteilt. In einer konkreten Ausführung nach Anspruch 17 hat sich eine Kennfeldaufteilung in einer 8 x 8 Matrix mit 8 Last- und 8 Drehzahlstützstellen als ausreichend erwiesen.

Nach Anspruch 18 werden die in den Korrekturkennfeldern abgelegten Werte auch beim Abstellen der Brennkraftmaschine festgehalten und stehen nach dem Wiederanlassen der Brennkraftmaschine sofort wieder zur Verfügung. Geeignete Speicherbausteine, in die elektrisch und bleibend Speicherwerte eingegeben werden können, sind bekannt (EEPROM).

Anhand der Zeichnung wird die Erfindung näher erläutert.

Es zeigen

| Fig. 1 | ein Diagramm, das die Lage der Klopfgrenze in Abhängigkeit der Last und des Zündwinkels zeigt, |
| Fig. 2 | ein Diagramm, in dem die Anpassung eines Bezugsniveaus ($L_Z$) für eine Kurzzeitregelung eingetragen ist, |
| Fig. 3 | ein Diagramm, das die prinzipielle Lage der Klopfgrenze und den prinzipiellen Verlauf der Werte für die Regelhübe verdeutlicht, |
| Fig. 4 | ein Flußdiagramm, das die Auswertung der Regelhübe veranschaulicht, |
| Fig. 5 und 6 | jeweils eine Darstellung von Korrekturkennfeldern, |

| Fig. 7 | eine Darstellung eines zugeordneten Langzeit-Schwellwert-Kennfelds, |
| Fig. 8 | eine Darstellung eines zugeordneten Langzeit-Nachführ-Kennfelds und |
| Fig. 9 | ein Flußdiagramm für die Langzeitanpassung mit der Ergänzung von Korrekturwerten durch Nachführwerte. |

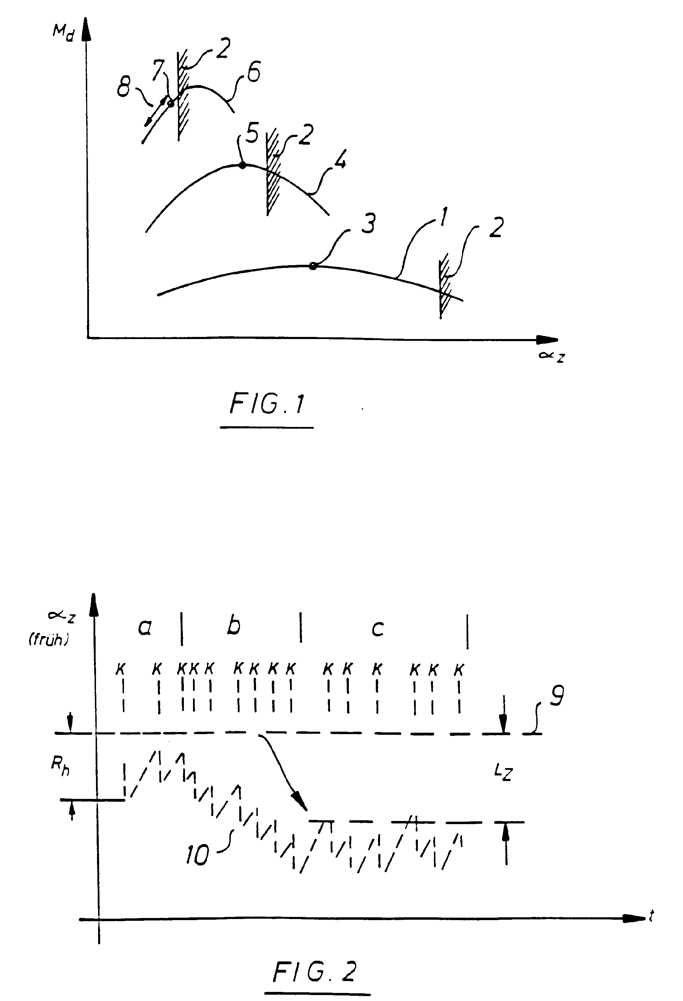

In Fig. 1 ist die Abhängigkeit des Drehmoments von der Zündzeitpunkteinstellung $\alpha_z$ angegeben. Bei geringer Last ist die Kurve 1 relativ flach und die Klopfgrenze 2 liegt weit vom Maximum der Kurve 1 ab. Die Brennkraftmaschine wird zweckmäßig am Punkt 3, d.h. im Maximum betrieben, wobei keine klopfenden Verbrennungen auftreten.

Die Kurve 4 stellt etwa den Halblastbereich dar, ist stärker gekrümmt und die Klopfgrenze 2 ist näher an den Maximumpunkt 5, in dem die Brennkraftmaschine optimal betrieben wird, herangerückt. Bei entsprechender Steuerung sind aber auch hier keine klopfenden Verbrennungen zu befürchten.

Die Kurve 6 stellt den Vollastbereich dar, wobei die Klopfgrenze 2 vor dem Maximum liegt, d.h. im Bereich zwischen den Kurven 4 und 6 sind bei optimiertem Betrieb Klopfereignisse zu erwarten, so daß auch für diesen Bereich die Klopfregelung aktiv ist. Auf der Kurve 6 ist der optimale Betriebspunkt 7 eingezeichnet, der gerade kurz vor der Klopfgrenze 2 liegt. Der Doppelpfeil 8 soll das Herantasten der Zündzeitpunktvorgabe an diesen Punkt 7 mit Hilfe der Kurzzeitregelung andeuten.

Im Diagramm der Fig. 2 ist nach oben der Wert des Zündwinkels $\alpha_z$ mit der Richtung nach früher Zündung über die nach rechts weisende Zeitachse aufgetragen. Die horizontal verlaufende, strichlierte Linie entspricht einer Kennfeldvorgabe 9 für den Zündzeitpunkt aus einem fest abgelegten Kennfeld zu einem bestimmten Kennfeldbereich. Diese Kennfeldvorgabe 9 ist so gewählt, daß die Brennkraftmaschine bei üblichen Betriebsbedingungen nahe an der Klopfgrenze betrieben wird und somit vereinzelt Klopfereignisse auftreten können. Dieser Zustand ist im Zeitintervall (a) dargestellt, wo mit Hilfe einer an sich bekannten und nicht explizit beschriebenen Kurzzeitregelung diese Kennfeldvorgabe beim Auftreten von Klopfereignissen (K) um einen Schritt auf einen Regelhub für einen aktuellen Zündzeitpunkt (dargestellt durch die Kurve 10) in Richtung "spät" zurückgenommen wird. Bei einem weiteren Ausbleiben von Klopfereignissen wird dann der Wert für den aktuellen Zündzeitpunkt um einen Schritt in Richtung Frühzündung wieder auf die Kennfeldvorgabe 9 hingeführt.

Durch Veränderungen von Betriebsparametern, beispielsweise nach dem Betanken und allmählichen Durchmischen mit einem Kraftstoff schlechterer Qualität treten im Zeitintervall (b) nacheinander vermehrt Klopfereignisse auf. Damit werden die aktuellen Zündzeitpunkte (Kurve 2) nacheinander weiter von der ursprünglichen Kennfeldvorgabe 9 in Richtung "spät" wegbewegt. Auf einem solchen Niveau, im Abstand $L_Z$ von der Kennfeldvorgabe 9, das einer geänderten Klopfgrenze entspricht, pendelt sich dann die Kurzzeitregelung wieder ein, wie dies im Zeitintervall (c) dargestellt ist. Der Wert $L_Z$ entspricht einem um eine vorgegebene Schwelle verringerten Wert, der durch Mittelung der vorher aufgetretenen Regelhübe ermittelt wird. Beim Verlassen des Kennfeldbereichs, für den der Verlauf des Zündzeitpunkts in Fig. 2 dargestellt ist, wird der Wert $L_Z$ als Anpassungswert abgespeichert und bei einem erneuten Anfahren des Kennfeldbereichs sofort wieder ausgegeben, so daß die Regelung sofort (anschließend an Kurve 10 in Fig. 2) ohne weitere Einschwingvorgänge weiterläuft.

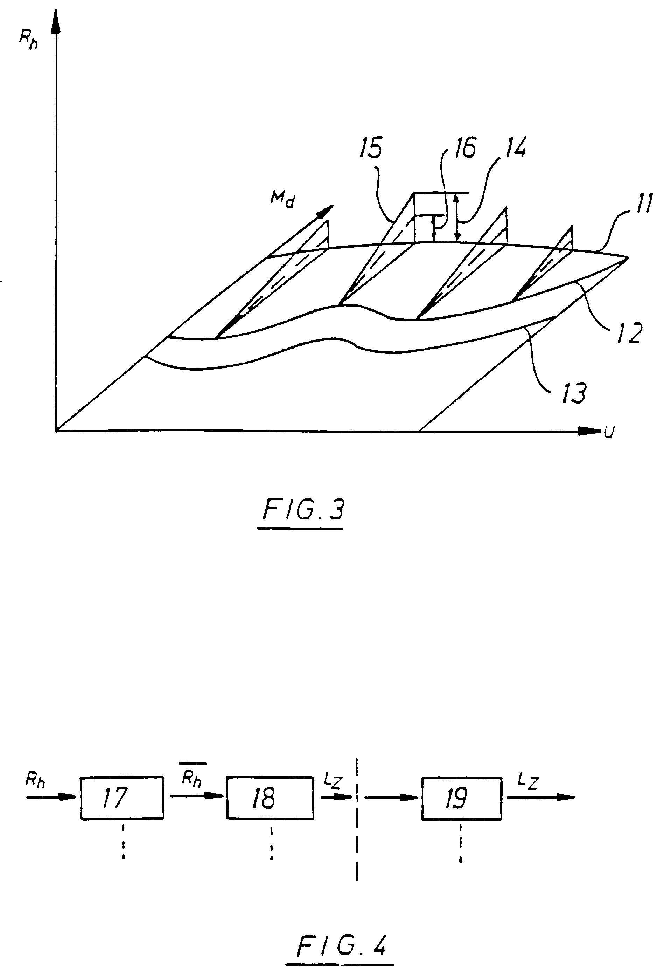

In Fig. 3 ist in einer horizontalen Ebene das Drehmoment bzw. die Last über die Drehzahl aufgetragen, wobei die Kurve 11 den Vollastverlauf zeigt, die Kurve 12 den Bereich abgrenzt, über dem bei optimalen Betrieb der Brennkraftmaschine Klopfereignisse zu erwarten sind (vergleiche Fig. 1) und eine Kurve 13 im Abstand zur Kurve 12 einen Bereich nach unten abgrenzt, in dem die Klopfregelung nicht erforderlich ist und daher inaktiv geschaltet werden kann.

Nach oben ist in Fig. 3 der Betrag der Regelhübe beispielhaft an vier Drehzahlpunkten eingezeichnet. Dabei ist zu erkennen, daß der Regelhub 14 bei Vollastbetrieb (Kurve 11) größer sein muß, als in Richtung auf den Teillastbetrieb, d.h. daß im Vollastbereich die Klopfregelung stärker eingreifen muß. Um den prinzipiellen Verlauf zu zeigen, ist in Fig. 3 ein linearer Anstieg (Gerade 15) eingezeichnet, für einen speziellen Zylinder kann hier eine genauere und angepaßte Kurve ermittelt werden. Der Regelhub 14 entspricht beispielsweise einem Betrieb mit Kraftstoff geringerer Qualität, der kleinere Regelhub 16 (strichlierte Linie) entspricht dem Betrieb mit einem Treibstoff besserer Qualität.

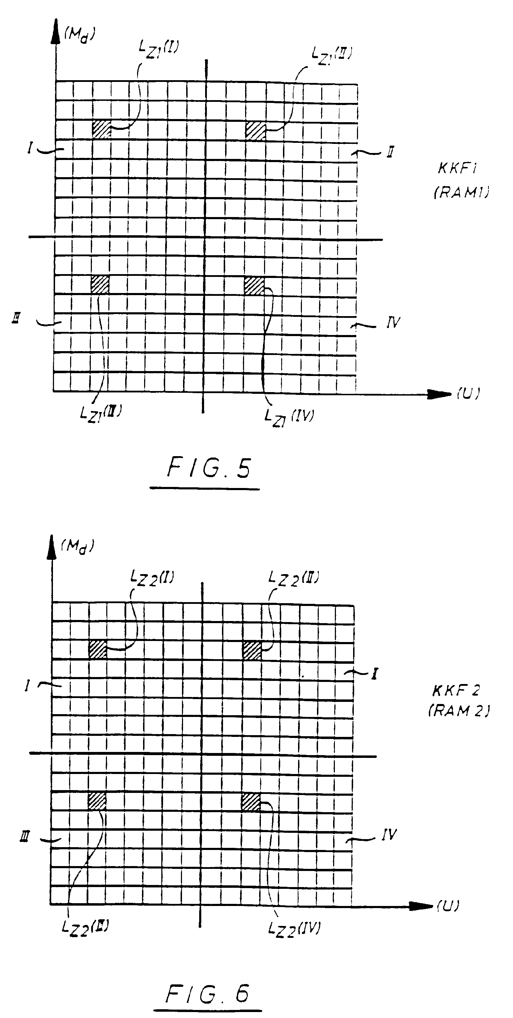

In Fig. 4 ist allgemein die Ermittlung eines Anpassungswertes $L_Z$ als abzuspeichernder Langzeitwert angegeben. Der Regelhubverlauf ($R_h$ als Differenz zwischen der Kennfeldvorgabe zu dem aktuellen Zündzeitpunkt) wird in einer Einheit 17 gemittelt zu einem Mittelwert $\overline{R}_h$. Dieser Mittelwert $\overline{R}_h$ wird in einer Einheit 18 bewertet, beispielsweise daraufhin bewertet, ob eine vorgegebene Schwelle zu einem vorhergehenden Wert überschritten wurde. Bei einer positiven Bewertung wird der Wert $L_Z$ in einen Korrekturkennfeldbereich eines Korrekturkennfeldes 19 (entsprechend Fig. 6) abgelegt und beim Wiederanfahren dieses Korrekturkennfeldbereiches ausgelesen. Mit den vertikalen, punktierten Linien ist angedeutet, daß entsprechende Einrichtungen für jeden Zylinder vorhanden sind.

In den Fig. 5 und 6 sind jeweils Korrekturkennfelder als 8 x 8 Matrixkennfelder in einer 16 x 16 Matrix zusammengefaßt. Die 8 x 8 Kennfelder sind jeweils einem Zylinder (I - IV) einer Vierzylinder-Brennkraftmaschine zugeordnet. Das erste Korrekturkennfeld (KKF1) ist in einem ersten Bereich eines Arbeitsspeichers (RAM1) und das zweite Korrekturkennfeld (KKF2) in einem zweiten Bereich (RAM2) abgelegt.

Beim Betrieb der Brennkraftmaschine mit einer bestimmten Last und einer bestimmten Drehzahl sind beispielsweise alle schraffiert in den Fig. 5 und 6 eingezeichneten Kennfeldbereiche zylinderspezifisch betroffen.

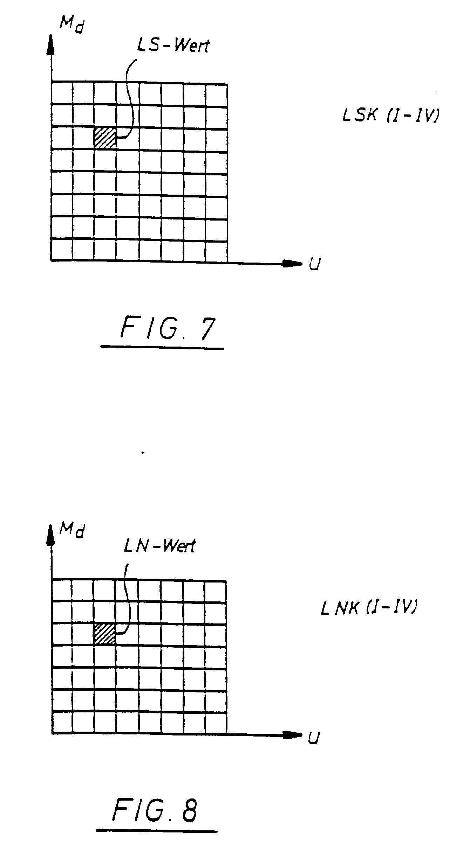

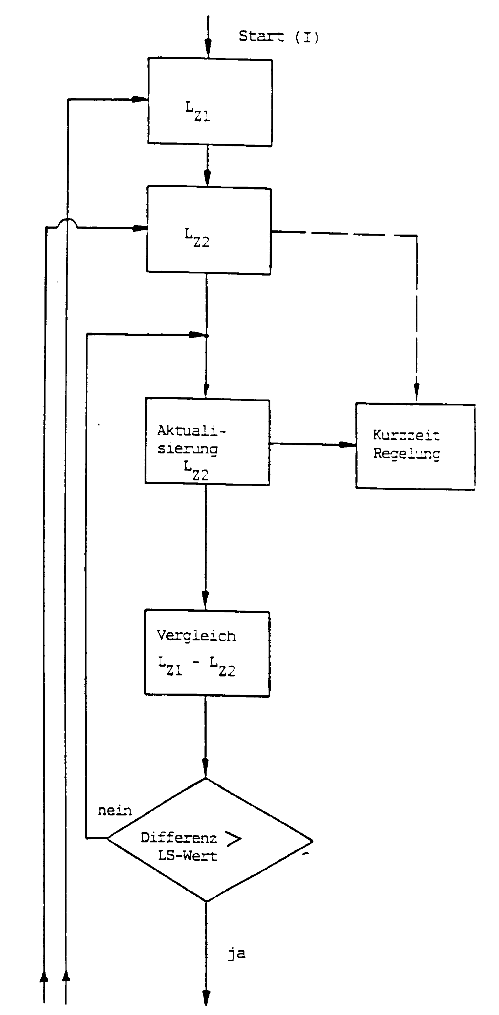

In Fig. 7 ist ein Langzeit-Schwellwert-Kennfeld dargestellt, in dem für alle Zylinder gleiche Langzeit-Schwellwerte abgelegt sind. Ähnlich ist in Fig. 8 ein Langzeit-Nachführ-Kennfeld dargestellt, in dem für alle Zylinder gemeinsam Langzeit-Nachführwerte abgelegt sind.

Beim Betrieb der Brennkraftmaschine in den in Fig. 5 und Fig. 6 schraffiert gezeichneten Bereichen sind somit auch die in den Fig. 7 und 8 schraffiert gezeichneten Bereiche zugeordnet und angesprochen.

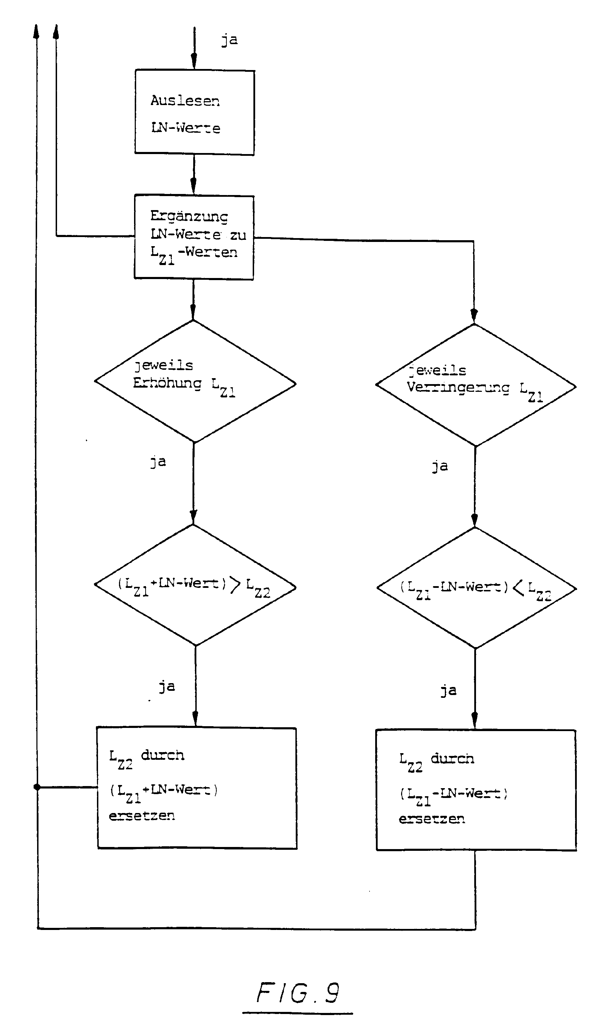

Anhand des Flußdiagramms nach Fig. 9 wird die Nachführmaßnahme näher erläutert. Es werden dazu die Änderungen der Anpassungswerte $L_{Z1}(I)$ und $L_{Z2}(I)$ für den ersten Zylinder (I) betrachtet, wie sie jeweils im linken, oberen Matrixbereich der Fig. 5 und 6 abgelegt sind.

Beim Start der Brennkraftmaschine liegen abgespeicherte Werte $L_{Z1}$ und $L_{Z2}$ im ersten Quadranten der Korrekturkennfelder KKF1 und KKF2 vor (beim allerersten Start, z.B. als Initialisierungskennfelder). Die Werte $L_{Z2}$ aus dem Korrekturkennfeld 2 werden für die Kurzzeitregelung zur Verfügung gestellt.

Im Laufe des Betriebs werden, bezogen auf die Kennfeldbereiche, in Abhängigkeit der Regelhübe andere Anpassungwerte gelernt, die im Korrekturkennfeld 2 abgelegt werden, so daß die $L_{Z2}$-Werte aktualisiert werden.

Bei einer Aktualisierung von $L_{Z2}$-Werten wird ein Vergleich mit den entsprechenden (nicht aktualisierten) $L_{Z1}$-Werten durchgeführt.

Für den Fall, daß die (absolute) Differenz größer als ein zugeordneter Schwellwert (LS-Wert) aus dem Langzeit-Schwellwert-Kennfeld nach Fig. 7 ist, werden die LN-Werte ausgelesen und damit die zugeordneten $L_{Z1}$-Werte ergänzt.

Eine Ergänzung der $L_{Z2}$-Werte durch LN-Werte wird erst nach folgender Prüfung durchgeführt: Bei einer Erhöhung von $L_{Z1}$-Werten durch LN-Werte wird geprüft, ob der neue $L_{Z1}$-Wert größer als der gerade vorliegende $L_{Z2}$-Wert ist. Nur für diesen Fall wird auch der $L_{Z2}$-Wert durch den neuen, ergänzten $L_{Z1}$-Wert im zweiten Korrekturkennfeld (KKF2) ersetzt. Wenn ohnehin ein höherer, tatsächlich "gelernter" Korrekturwert im zweiten Korrekturkennfeld vorliegt, wird dieser beibehalten. Entsprechend wird verfahren, wenn eine Verringerung durch die Ergänzung mit LN-Werten durchgeführt wird.

Zusammenfassend ist festzustellen, daß mit der vorstehend geschilderten Nachführmaßnahme eine gute Anpassung der Korrekturwerte bei erkannten, großen Änderungen für einen bestimmten Kennfeldbereich durchführbar ist, wodurch die Anzahl von Klopfereignissen reduziert und die Klopfregelung stabiler gehalten werden kann.

## Patentansprüche

1.  Klopfregelung einer fremdgezündeten Brennkraftmaschine,

    mit einer Kurzzeitregelung, bei der aus einem in Abhängigkeit von Betriebsparametern fest abgelegten Kennfeld eine Kennfeldvorgabe für den Zündzeitpunkt jeweils zu einem bestimmten Kennfeldbereich der Brennkraftmaschine erfolgt,

    beim Auftreten von Klopfereignissen (K) diese Kennfeldvorgabe jeweils um einen Schritt zu einem Regelhub ($R_h$) auf einen Wert für einen aktuellen Zündzeitpunkt in Richtung "spät" modifiziert wird und

    beim Ausbleiben von Klopfereignissen (K) der Wert für den aktuellen Zündzeitpunkt jeweils um einen Schritt zu einem Regelhub ($R_h$) in Richtung "früh" wieder auf die Kennfeldvorgabe hingeführt wird,

    dadurch gekennzeichnet,

    daß eine zusätzliche Langzeitanpassung mit einer ersten Korrekturmaßnahme dergestalt ausgeführt ist,

    daß für den bestimmten Kennfeldbereich ein Anpassungswert ($L_Z$) entsprechend etwa dem Abstand der aktuellen Zündzeitpunkte von der Kennfeldvorgabe ermittelt wird, dieser Anpassungswert ($L_Z$) beim Verlassen des Kennfeldbereichs in einem zugeordneten Korrekturkennfeld (KKF2) abgelegt wird und der als "gelernte" Korrekturgröße beim Wiederanfahren dieses Kennfeldbereichs ausgegeben und die Kennfeldvorgabe damit zur Vorsteuerung der Kurzzeitregelung beaufschlagt wird, wobei die Kennfeldvorgabe bei auftretenden Klopfereignissen (K) um den Anpassungswert ($L_Z$) von der Klopfgrenze weg zurückgenommen bzw. modifiziert wird, so daß die Kurzzeitregelung auf eine neue Zündzeitpunktvorgabe entsprechend einem anderen Niveau aus Kennfeldvorgabe plus Anpassungswert für die Regelhübe bezogen ist und

    daß die Langzeitanpassung eine zweite Nachführmaßnahme enthält, dergestalt, daß bei einer großen, erkannten und erforderlichen Änderung eines Anpassungswerts für einen oder ggfs. mehrere Kennfeldbereiche bzw. an der zugeordneten Korrekturkennfeldstelle auch an den anderen Korrekturkennfeldstellen entsprechende Änderungen der Anpassungswerte ($L_Z$) durch eine Ergänzung mit Nachführwerten (LN) durchgeführt wird.

2. Klopfregelung nach Anspruch 1, dadurch gekennzeichnet, daß als Anpassungswert ($L_Z$) ein aktueller Regelhub ($R_h$) vor dem Verlassen des Kennfeldbereichs verwendet wird.

3. Klopfregelung nach Anspruch 1, dadurch gekennzeichnet, daß der Anpassungswert ($L_Z$) durch Mittelung der jeweils zum Zeitpunkt eines Klopfereignisses vorliegenden Regel-hübe ($\overline{R}_h$) in einem Beobachtungszeitintervall oder der Verweildauer im bestimmten Kennfeldbereich erhalten wird.

4. Klopfregelung nach Anspruch 1, dadurch gekennzeichnet, daß der Anpassungswert ($L_Z$) durch Mittelung aller in einem Beobachtungszeitintervall oder der Verweildauer im bestimmten Kennfeldbereich vorliegenden Regelhübe ($\overline{R}_h$) erhalten wird.

5. Klopfregelung nach Anspruch 3 oder 4, dadurch gekennzeichnet, daß ein neuer Anpassungswert ($L_Z$) nur dann im Korrekturkennfeld (KKF2) abgelegt wird, wenn der Wert der Änderung der gemittelten Regelhübe ($\overline{R}_h$) über dem Wert einer festgelegten Schwelle (S) liegt und/oder eine Verweildauer im bestimmten Kennfeldbereich über eine festgelegte Anzahl von Zündungen ermittelt wurde.

6. Klopfregelung nach Anspruch 1, dadurch gekennzeichnet, daß der Anpassungswert ($L_Z$) durch Aufsummierung von vorgegebenen, jedem Klopfereignis zugeordneten Inkrementwerten während eines Beobachuntszeitintervalls bzw. einer Verweildauer erhalten wird.

7. Klopfregelung nach einem der Ansprüche 1 bis 6, dadurch gekennzeichnet, daß beim Ausbleiben oder wenigen (Schwelle S) Klopfereignissen (K) innerhalb wenigstens eines Beobachtungszeitintervalls oder der Verweildauer im bestimmten Kennfeldbereich der Anpassungswert in Richtung auf die ursprüngliche Kennfeldvorgabe jeweils schrittweise um eine bestimmte Rückführgröße ($\Delta L_K$) zurückgenommen wird.

8. Klopfregelung nach einem der Ansprüche 1 bis 7, dadurch gekennzeichnet, daß für jeden Zylinder (I - IV) der Brennkraftmaschine eine zylinderselektive Klopfregelung vorgesehen ist bzw. jedem Zylinder (I - IV) ein Korrekturkennfeld zugeordnet ist.

9. Klopfregelung nach einem der Ansprüche 1 bis 8, dadurch gekennzeichnet,
daß zur Erkennung einer großen Änderung eines Anpassungswerts ($L_Z$) an einem Kennfeldbereich für die Nachführmaßnahme zwei entsprechende Korrekturkennfelder (KKF1 und KKF2) abgelegt werden,
daß das erste Korrekturkennfeld (KKF1) (Initialisierungskennfeld) durch die erste Korrekturmaßnahme nicht beeinflußt wird,
daß das zweite Korrekturkennfeld (KKF2) während des Betriebs durch die erste Korrekturmaßnahme ggfs. durch Änderung der abgelegten Anpassungswerte ($L_{Z2}$) aktualisiert und zur Korrektur der Kennfeldvorgabe für die Kurzzeitregelung verwendet wird,
daß abgelegte Anpassungswerte ($L_{Z1}$ und $L_{Z2}$) an entsprechenden Stellen eines Kennfeldbereichs der zwei Korrekturkennfelder (KKF1 und KKF2) verglichen werden und bei Überschreitung eines absoluten Differenzwerts bzw. eines bestimmten Schwellwerts (LS) eine Ergänzung aller abgelegten Anpassungswerte mit Nachführwerten (LN) durchgeführt wird.

10. Klopfregelung nach Anspruch 9, dadurch gekennzeichnet, daß ein Langzeit-Schwellwert-Kennfeld (LSK) vorgesehen ist, in dem an entsprechenden Stellen der Korrekturkennfelder (KKF1 und KKF2) bzw. den entsprechenden Kennfeldbereichen bestimmte Schwellwerte (LS) für den Vergleich der Anpassungswerte ($L_{Z1}$ und $L_{Z2}$) abgelegt sind.

11. Klopfregelung nach Anspruch 8 und 10, dadurch gekennzeichnet, daß für die jedem Zylinder (I - IV) zugeordneten Korrekturkennfelder nur ein Langzeit-Schwellwert-Kennfeld (LSK) zur Verfügung steht.

12. Klopfregelung nach einem der Ansprüche 1 bis 11, dadurch gekennzeichnet, daß ein Langzeit-Nachführ-Kennfeld (LNK) vorgesehen ist, in dem an entsprechenden Stellen der Korrekturkennfelder (KKF1 und KKF2) bzw. den entsprechenden Kennfeldbereichen bestimmte Nachführwerte (LN) zur Ergänzung der Anpassungswerte ($L_{Z1}$ und $L_{Z2}$) abgelegt sind.

**13.** Klopfregelung nach Anspruch 8 und 12, dadurch gekennzeichnet, daß für die jedem Zylinder (I - IV) zugeordneten Korrekturkennfelder (KKF1 und KKF2) nur ein Langzeit-Nach-führ-Kennfeld (LNK) zur Verfügung steht.

**14.** Klopfregelung nach Anspruch 12 oder 13, dadurch gekennzeichnet, daß die Ergänzung der zwei Korrekturkennfelder (KKF1 und KKF2) mit Nachführwerten (LN-Werte) dergestalt durchgeführt wird, daß die abgelegten Anpassungswerte ($L_{Z1}$) im ersten Korrekturkennfeld (KKF1) durch die Nachführwerte (LN) erhöht oder verringert werden,
daß die erhöhten (bzw. verringerten) Anpassungswerte ($L_{Z1}$) des ersten Korrekturkennfeldes (KKF1) mit den im zweiten Korrekturkennfeld (KKF2) befindlichen, aktuellen Anpassungswerten ($L_{Z2}$) verglichen werden und
daß die Anpassungswerte ($L_{Z2}$) im zweiten Korrekturkennfeld (KKF2) jeweils auf die erhöhten (bzw. verringerten) Anpassungswerte ($L_{Z1}$) des ersten Korrekturkennfeldes (KKF1) erhöht (bzw. verringert) werden, falls sie unter (bzw. über) diesen ersten Anpassungswerten (KKF1) liegen, wobei aktualisierte, zweite Anpassungswerte ($L_{Z2}$), die bereits über (bzw. unter) den ersten Anpassungswerten ($L_{Z1}$) erhalten werden und als tatsächlich "gelernte Werte" weiter verwendet werden.

**15.** Klopfregelung nach einem der Ansprüche 1 bis 14, dadurch gekennzeichnet, daß mögliche Ergänzungen von Anpassungswerten ($L_{Z1}$ und $L_{Z2}$) mit Nachführwerten (LN-Werte) in einer Richtung bei einer Erhöhung oder Verringerung auf eine bestimmte, maximale Anzahl zum Schutz gegen ein Weglaufen der Regelparameter festgelegt sind.

**16.** Klopfregelung nach einem der Ansprüche 1 bis 15, dadurch gekennzeichnet, daß eine Anzahl benachbarter Kennfeldbereiche in Kennfeldvorgabebereiche, entsprechend Drehzahl- und Lastbereiche, zusammengefaßt sind, denen jeweils dieselbe Kennfeldvorgabe zugeordnet ist und
daß die Korrekturkennfelder (KKF1 und KKF2), das Langzeit-Schwellwert-Kennfeld (LSK) und das Langzeit-Nach-führ-Kennfeld (LNK) den Kennfeldvorgabebereichen entsprechende und zugeordnete Kennfeldbereiche enthalten, in denen zusammengefaßte, gleiche Werte abgelegt sind.

**17.** Klopfregelung nach Anspruch 16, dadurch gekennzeichnet, daß jedes einem Zylinder (I - IV) zugeordnete Korrekturkennfeld (KKF1 und KKF2) ebenso wie das Langzeit-Schwellwert-Kennfeld (LSK) und das Langzeit-Nachführ-Kennfeld (LNK) eine 8 x 8 Matrix mit 8 Last- und 8 Drehzahlstützstellen ist.

**18.** Klopfregelung nach einem der Ansprüche 1 bis 17, dadurch gekennzeichnet, daß die in den Korrekturkennfeldern abgelegten Anpassungswerte ($L_{Z1}$ und $L_{Z2}$) auch beim Abstellen der Brennkraftmaschine bzw. des Fahrzeugs festgehalten werden und beim Wiederanlassen der Brennkraftmaschine sofort zur Verfügung stehen.

## Claims

**1.** Knock control on a spark-ignition internal combustion engine,
with short-time control involving the use of a map permanently stored in dependence on operating parameters to pre-specify a map for the ignition point for a respective given map range of the internal combustion engine,
if knocking episodes (K) occur, this pre-specified map is modified in the "retard" direction by one respective increment on a control stroke ($R_h$), to a value for a current ignition point, and
in the absence of knocking episodes (K), the value for the current ignition point is moved back in the "advance" direction towards the pre-specified map, by one respective increment on a control stroke ($R_h$),
characterised in that
additional long-time adaptation is performed using a first corrective action, in such a manner
that for the given map range an adaptation value ($L_Z$) corresponding roughly to the distance of the current ignition points from the pre-specified map is established, upon leaving the map range this adaptation value ($L_Z$) is stored in an associated correction map (KKF2) and is output as a "learned" corrective variable when said map range is again approached and the pre-specified map is thus activated to pre-regulate the short-time control, the pre-specified map being withdrawn or modified by the adaptation value ($L_Z$) away from the knock limit should knocking episodes (K) occur, with the result that the short-time control is based on a new pre-specified ignition point corresponding to a different level made up of the pre-specified map plus adaptation value for the control strokes, and
that the long-time adaptation includes a second follow-up action, in such a manner that in the event of a major, recognized and necessary change to an adaptation value for one or possibly more map ranges, or at the associated correction map point, corresponding changes to the adaptation values ($L_Z$) are also carried out at the other correction map points by supplementing them with follow-up values (LN).

2. Knock control according to claim 1, characterised in that the adaptation value ($L_Z$) used is a current control stroke ($R_h$) prior to leaving the map range.

3. Knock control according to claim 1, characterised in that the adaptation value ($L_Z$) is obtained by averaging the respective control strokes ($\overline{R_h}$) present at the time of a knocking episode over an observation time interval or the delay period in the given map range.

4. Knock control according to claim 1, characterised in that the adaptation value ($L_Z$) is obtained by averaging all the control strokes ($\overline{R_h}$) present in an observation time interval or the delay period in the given map range.

5. Knock control according to claim 3 or 4, characterised in that a new adaptation value ($L_Z$) is only stored in the correction map (KKF2) once the value of the change to the averaged control strokes ($\overline{R_h}$) lies above the value of a specified threshold (S) and/or a delay period in the given map range has been established by means of a specified number of ignitions.

6. Knock control according to claim 1, characterised in that the adaptation value ($L_Z$) is obtained by totalizing predetermined increment values associated with each knocking episode during an observation time interval or a delay period.

7. Knock control according to any of claims 1 to 6, characterised in that in the absence or near absence (threshold S) of knocking episodes (K) within at least one observation time interval or the delay period in the given map range the adaptation value is withdrawn, in each case stepwise by a given restore variable ($\Delta L_K$), in the direction of the original pre-specified map.

8. Knock control according to any of claims 1 to 7, characterised in that there is provision for cylinder-selective knock control for each cylinder (I - IV) of the internal combustion engine and a correction map is associated with each cylinder (I - IV).

9. Knock control according to any of claims 1 to 8, characterised in that
for recognizing a major change to an adaptation value ($L_Z$) two corresponding correction maps (KKF1 and KKF2) are stored on a map range for the follow-up action,
the first correction map (KKF1) (initialization map) is not affected by the first corrective action,
in the course of operation the second correction map (KKF2) is updated by the first corrective action, if appropriate by altering the stored adaptation values ($L_{Z2}$), and is used for correcting the pre-specified map for the short-time control,
stored adaptation values ($L_{Z1}$ and $L_{Z2}$) are compared at corresponding points of a map range of the two correction maps (KKF1 and KKF2) and if an absolute differential, or given threshold value (LS), is exceeded, all stored adaptation values are supplemented with follow-up values (LN).

10. Knock control according to claim 9, characterised by the provision of a long-time threshold-value map (LSK) in which certain threshold values (LS) are stored at corresponding points of the correction maps (KKF1 and KKF2), or the corresponding map ranges, for comparison of the adaptation values ($L_{Z1}$ and $L_{Z2}$).

11. Knock control according to claims 8 and 10, characterised in that only one long-time threshold-value map (LSK) is available for the correction maps associated with each cylinder (I - IV).

12. Knock control according to any of claims 1 to 11, characterised by the provision of a long-time follow-up map (LNK) in which certain follow-up values (LN) for supplementing the adaptation values ($L_{Z1}$ and $L_{Z2}$) are stored at corresponding points of the correction maps (KKF1 and KKF2), or the corresponding map ranges.

13. Knock control according to claims 8 and 12, characterised in that only one long-time follow-up map (LNK) is available for the correction maps (KKF1 and KKF2) associated with each cylinder (I - IV).

14. Knock control according to claim 12 or 13, characterised in that the supplementation of the two correction maps (KKF1 and KKF2) with follow-up values (LN values) is carried out in such a manner that the stored adaptation values ($L_{Z1}$) are increased or decreased in the first correction map (KKF1) by the follow-up values (LN),
the increased (or decreased) adaptation values ($L_{Z1}$) of the first correction map (KKF1) are compared with the current adaptation values ($L_{Z2}$) to be found in the second correction map (KKF2), and
the adaptation values ($L_{Z2}$) in the second correction map (KKF2) are respectively increased (or decreased) to the increased (or decreased) adaptation values ($L_{Z1}$) of the first correction map (KKF1), in the event that they lie below (or above) these first adaptation values ($L_{Z1}$), thereby obtaining updated, second adaptation values ($L_{Z2}$) which are already above (or below) the first adaptation values ($L_{Z1}$) and go on to be used as actual "learned values".

15. Knock control according to any of claims 1 to 14, characterised in that possible supplementations of adaptation values ($L_{Z1}$ and $L_{Z2}$) with follow-up values (LN values) are fixed in one direction in the event of an increase or decrease, to a given, maximum number so as to guard against a shift in the control parameters.

16. Knock control according to any of claims 1 to 15, characterised in that a number of neighbouring map ranges are combined into pre-specified map ranges, corresponding to speed and load ranges, to which the same pre-specified map is associated in each case, and
the correction maps (KKF1 and KKF2), the long-time threshold-value map (LSK) and the long-time follow-up map (LNK) contain map ranges which correspond to and are associated with the pre-specified map ranges and in which combined, identical values are stored.

17. Knock control according to claim 16, characterised in that each correction map (KKF1 and KKF2) associated with a cylinder (I - IV) is an 8 x 8 matrix with 8 load and 8 speed basepoints, as is the long-time threshold-value map (LSK) and the long-time follow-up map (LNK).

18. Knock control according to any of claims 1 to 17, characterised in that the adaptation values ($L_{Z1}$ and $L_{Z2}$) stored in the correction maps are preserved even if the internal combustion engine, or vehicle, is switched off, and are immediately available when the internal combustion engine is restarted.

## Revendications

1. Système de réglage anti-cognement pour moteur à combustion interne à allumage commandé,
avec un réglage à court terme, dans lequel il est effectué, à partir d'un champ caractéristique établi de manière fixe en fonction de paramètres de fonctionnement, une présélection du point d'allumage dans le champ caractéristique pour chaque zone déterminée du champ caractéristique du moteur à combustion interne,
en cas d'apparition de phénomènes de cognement (K), cette présélection dans le champ caractéristique est modifiée dans le sens du "retard", d'un pas chaque fois pour une course de réglage ($R_h$), à une valeur pour un point d'allumage actuel,
en l'absence de phénomènes de cognement (K), la valeur pour le point d'allumage actuel est ramenée dans le sens de l'"avance", d'un pas chaque fois pour une cource de réglage ($R_h$), à la présélection dans le champ caractéristique,
caractérisé
en ce qu'une adaptation supplémentaire à long terme est effectuée au moyen d'une première mesure de correction, de telle sorte qu'il est établi, pour la zone déterminée du champ caractéristique, une valeur d'adaptation ($L_Z$) correspondant à peu près à l'écart entre les points d'allumage actuels et la présélection dans le champ caractéristique; lorsque la zone du champ caractéristique est quittée, cette valeur d'adaptation ($L_Z$) est reportée dans un champ caractéristique de correction (KKF2) associé et elle en est sortie, en tant que grandeur de correction "apprise", lors du retour dans cette zone du champ caractéristique, et la présélection dans le champ caractéristique est ainsi prise pour la pré-commande du réglage à court terme, la présélection dans le champ caractéristique étant modifiée ou ramenée à distance de la limite de cognement, de la valeur d'adaptation ($L_Z$), lors de l'apparition de phénomènes de cognement (K), de sorte que le réglage à court terme est appliqué, pour les courses de réglage, à une nouvelle présélection du point d'allumage correspondant à un autre niveau constitué par la présélection dans le champ caractéristique plus la valeur d'adaptation, et

en ce que l'adaptation à long terme comprend une seconde mesure de poursuite, de telle façon que, dans le cas d'une modification importante, reconnue et nécessaire d'une valeur d'adaptation pour une zone ou éventuellement plusieurs zones du champ caractéristique ou à l'endroit associé du champ caractéristique de correction, il est également effectué, aux autres endroits du champ caractéristique de correction, des modifications correspondantes des valeurs d'adaptation ($L_Z$) en les complétant avec des valeurs de poursuite (LN).

2. Système de réglage anti-cognement selon la revendication 1, caractérisé en ce qu'il est utilisé, comme valeur d'adaptation ($L_Z$), une course de réglage actuelle ($R_h$) avant que ne soit quittée la zone du champ caractéristique.

3. Système de réglage anti-cognement selon la revendication 1, caractérisé en ce que la valeur d'adaptation ($L_Z$) est obtenue par calcul de la moyenne des courses de réglage ($\overline{R_h}$) présentes chaque fois à l'instant d'un phénomène de cognement dans une période d'observation ou pendant la durée de séjour dans la zone déterminée du champ caractéristique.

4. Système de réglage anti-cognement selon la revendication 1, caractérisé en ce que la valeur d'adaptation ($L_Z$) est obtenue par calcul de la moyenne de toutes les courses de réglage ($\overline{R_h}$) présentes dans une période d'observation ou pendant la durée de séjour dans la zone déterminée du champ caractéristique.

5. Système de réglage anti-cognement selon la revendication 3 ou 4, caractérisé en ce qu'une nouvelle valeur d' adaptation ($L_Z$) n'est reportée dans le champ caractéristique de correction (KKF2) que quand la valeur de la modification des courses de réglage moyennées ($\overline{R_h}$) se situe au-dessus de la valeur d'un seuil fixé (S) et/ou quand une durée de séjour dans la zone déterminée du champ caractéristique a été constatée pendant un nombre fixé d'allumages.

6. Système de réglage anti-cognement selon la revendication 1, caractérisé en ce que la valeur d'adaptation ($L_Z$) est obtenue par sommation de valeurs incrémentielles prédéfinies, associées à chaque phénomène de cognement, pendant une période d'observation ou une durée de séjour.

7. Système de réglage anti-cognement selon l'une quelconque des revendications 1 à 6, caractérisé en ce que dans le cas où il n'y a pas ou peu (seuil S) de phénomènes de cognement (K) pendant au moins une période d'observation ou pendant la durée de séjour dans la zone déterminée du champ caractéristique, la valeur d'adaptation est réduite pas à pas d'une grandeur de retour déterminée ($\Delta L_K$) en direction de la présélection initiale dans le champ caractéristique.

8. Système de réglage anti-cognement selon l'une quelconque des revendications 1 à 7, caractérisé en ce qu'il est prévu, pour chaque cylindre (I - IV) du moteur à combustion interne, un système de réglage anti-cognement sélectif du cylindre ou il est associé, à chaque cylindre (I - IV), un champ caractéristique de correction.

9. Système de réglage anti-cognement selon l'une quelconque des revendications 1 à 8, caractérisé

en ce que, pour la reconnaissance d'une modification importante d'une valeur d'adaptation ($L_Z$) dans une zone du champ caractéristique, deux champs caractéristiques de correction correspondants (KKF1 et KKF2) sont établis pour la mesure de poursuite,

en ce que le premier champ caractéristique de correction (KKF1) (champ caractéristique d'initialisation) n'est pas influencé par la première mesure de correction,

en ce que le second champ caractéristique de correction (KKF2) est actualisé, en cours de fonctionnement, par la première mesure de correction, éventuellement par modification des valeurs d'adaptation reportées ($L_{Z2}$), et est utilisé pour la correction de la présélection dans le champ caractéristique pour le réglage à court terme, et

en ce que les valeurs d'adaptation ($L_{Z1}$ et $L_{Z2}$) reportées à des endroits correspondants d'une zone des deux champs caractéristiques de correction (KKF1 et KKF2) sont comparées et, en cas de dépassement d'une valeur de différence absolue ou d'une valeur de seuil déterminée (LS), toutes les valeurs d'adaptation reportées sont complétées avec des valeurs de poursuite (LN).

**10.** Système de réglage anti-cognement selon la revendication 9, caractérisé en ce qu'il est prévu un champ caractéristique de valeurs de seuil à long terme (LSK), dans lequel des valeurs de seuil déterminées (LS), pour la comparaison des valeurs d'adaptation ($L_{Z1}$ et $L_{Z2}$), sont reportées à des endroits correspondants des champs caractéristiques de correction (KKF1 et KKF2) ou dans les zones correspondantes du champ caractéristique.

**11.** Système de réglage anti-cognement selon la revendication 8 ou 10, caractérisé en ce que, pour les champs caractéristiques de correction associés à chaque cylindre (I - IV), il n'est disponible qu'un seul champ caractéristique de valeurs de seuil à long terme (LSK).

**12.** Système de réglage anti-cognement selon l'une quelconque des revendications 1 à 11, caractérisé en ce qu'il est prévu un champ caractéristique de poursuite à long terme (LNK), dans lequel des valeurs de poursuite déterminées (LN), destinées à compléter les valeurs d'adaptation ($L_{Z1}$ et $L_{Z2}$), sont reportées à des endroits correspondants des champs caractéristiques de correction (KKF1 et KKF2) ou dans les zones correspondantes du champ caractéristique.

**13.** Système de réglage anti-cognement selon la revendication 8 ou 12, caractérisé en ce que, pour les champs caractéristiques de correction (KKF1 et KKF2) associés à chaque cylindre (I - IV), il n'est disponible qu'un seul champ caractéristique de poursuite à long terme (LNK).

**14.** Système de réglage anti-cognement selon la revendication 12 ou 13, caractérisé en ce que les deux champs caractéristiques de correction (KKF1 et KKF2) sont complétés avec des valeurs de poursuite (valeurs LN) de telle manière que les valeurs d'adaptation ($L_{Z1}$) reportées dans le premier champ caractéristique de correction (KKF1) sont augmentées ou diminuées au moyen des valeurs de poursuite (LN),

que les valeurs d'adaptation ($L_{Z1}$) augmentées (ou diminuées) du premier champ caractéristique de correction (KKF1) sont comparées aux valeurs d'adaptation actuelles ($L_{Z2}$) qui se trouvent dans le second champ caractéristique de correction (KKF2), et

que les valeurs d'adaptation ($L_{Z2}$) dans le second champ caractéristique de correction (KKF2) sont augmentées (ou diminuées) chaque fois aux valeurs d'adaptation ($L_{Z1}$) augmentées (ou diminuées) du premier champ caractéristique de correction (KKF1) au cas où elles sont inférieures (ou supérieures) à ces premières valeurs d'adaptation (KKF1), des secondes valeurs adaptation ($L_{Z2}$) actualisées, qui sont déjà supérieures (ou inférieures) aux premières valeurs d'adaptation ($L_{Z1}$), étant conservées et utilisées de nouveau comme "valeurs apprises" effectives.

**15.** Système de réglage anti-cognement selon l'une quelconque des revendications 1 à 14, caractérisé en ce que, pour la protection contre une dérive des paramètres de réglage, les modifications possibles des valeurs d'adaptation ($L_{Z1}$ et $L_{Z2}$) par des valeurs de poursuite (valeurs LN) dans un sens lors d'une augmentation ou d'une diminution sont fixées à un nombre maximal déterminé.

**16.** Système de réglage anti-cognement selon l'une quelconque des revendications 1 à 15, caractérisé en ce qu'un certain nombre de zones voisines du champ caractéristique sont réunies en zones de présélection dans le champ caractéristique, correspondant à des plages de régimes et de charges, à chacune desquelles est associée la même présélection dans le champ caractéristique, et

en ce que les champs caractéristiques de correction (KKF1 et KKF2), le champ caractéristique de valeurs de seuil à long terme (LSK) et le champ caractéristique de poursuite à long terme (LNK) contiennent des zones de champ caractéristique qui correspondent et sont associées aux zones de présélection dans le champ caractéristique et dans lesquelles sont reportées des valeurs réunies égales.

**17.** Système de réglage anti-cognement selon la revendication 16, caractérisé en ce que chaque champ caractéristique de correction (KKF1 et KKF2) associé à un cylindre de (I - IV), de même que le champ caractéristique de valeurs de seuil à long terme (LSK) et que le champ caractéristique de poursuite à long terme (LNK) est une matrice 8 x 8 à 8 points de reprise de charge et 8 points de reprise de régime.

**18.** Système de réglage anti-cognement selon l'une quelconque des revendications 1 à 17, caractérisé en ce que les valeurs d'adaptation ($L_{Z1}$ et $L_{Z2}$) reportées dans les champs caractéristiques de correction sont conservées aussi à l'arrêt du moteur à combustion interne ou du véhicule et sont aussitôt disponibles au redémarrage du moteur à combustion interne.

FIG. 1

FIG. 2

13

$$FIG.3$$

$$FIG.4$$

14

_F I G. 5_

_F I G. 6_

$M_d$

LS-Wert

LSK (I – IV)

U

## FIG. 7

$M_d$

LN-Wert

LNK (I – IV)

U

## FIG. 8

Start (I)

$L_{Z1}$

$L_{Z2}$

Aktualisierung
$L_{Z2}$

Kurzzeit
Regelung

Vergleich
$L_{Z1} - L_{Z2}$

nein

Differenz > LS-Wert

ja

17

ja

```
┌─────────────┐
│  Auslesen   │
│  LN-Werte   │
└─────────────┘
       │
       ▼
┌─────────────┐
│  Ergänzung  │
│ LN-Werte zu │
│ L_Z1-Werten │
└─────────────┘
```

jeweils
Erhöhung $L_{Z1}$

jeweils
Verringerung $L_{Z1}$

ja                                    ja

$(L_{Z1}+LN\text{-Wert}) > L_{Z2}$          $(L_{Z1}-LN\text{-Wert}) < L_{Z2}$

ja                                    ja

```
┌─────────────────┐          ┌─────────────────┐
│  L_Z2 durch     │          │  L_Z2 durch     │
│ (L_Z1+LN-Wert)  │          │ (L_Z1-LN-Wert)  │
│  ersetzen       │          │  ersetzen       │
└─────────────────┘          └─────────────────┘
```

## FIG. 9